# EUROPÄISCHE PATENTANMELDUNG

(11) **EP 1 717 460 A1**
(43) Veröffentlichungstag der Anmeldung: **02.11.2006**
(21) Anmeldenummer: 05009194.1
(22) Anmeldetag: 27.04.2005
(51) Int. Cl.: F16B 37/06

(54) **Bauteil mit einem eingepressten Einpresselement sowie Einpresselement und Verfahren zum Einpressen eines Einpresselements**

(71) Anmelder: Richard Bergner Verbindungstechnik GmbH & Co. KG, 91124 Schwabach (DE)
(72) Erfinder: Dehlke, Klaus, 91575 Windsbach (DE); Strempel, Peter, 91126 Schwabach (DE)
(74) Vertreter: Tergau & Pohl Patentanwälte

(57) **Zusammenfassung**

Zur Ausbildung einer Pressverbindung zwischen einem Bauteils (6) und einer Einpressmutter (2) weist diese einen Verformungsbereich (16) auf, welcher beim Einpressvorgang durch einen geeignet geformten Stempel (22) in eine Bohrungswand (20) einer Bohrung (4) im Bauteil (6) eingepresst wird. Dadurch wird ein in zwei Richtungen wirksamer Formschluss ausgebildet, welcher für einen sicheren Halt der Einpressmutter sorgt. Die Einpressmutter (2) eignet sich insbesondere zur Befestigung in dicken Bauteilen (6) und ist weitgehend unabhängig von der Bauteildicke (D).

## Beschreibung

Die Erfindung betrifft ein Bauteil, insbesondere ein Blech, mit einem in eine Bohrung des Blechs eingepressten Einpresselement, insbesondere eine Einpressmutter. Die Erfindung betrifft weiterhin ein solches Einpresselement sowie ein Verfahren zum Einpressen des Einpresselements in das Bauteil.

Eine Einpressmutter dient zur Ausbildung einer Schraub-Befestigungsmöglichkeit an einem dünnwandigem Bauteil, wie beispielsweise ein Blech. Hierzu wird sie in das Blech eingepresst und darin formschlüssig gehalten. Sie weist üblicherweise ein Innengewinde auf, in das eine Schraube eingeschraubt werden kann. Alternativ zur Ausgestaltung als Einpressmuttern sind auch sogenannte Einpressbolzen als Einpresselemente bekannt, die sich zur Einpressmutter im Wesentlichen durch einen beispielsweise mit einem Außengewinde versehenem und fest angeformten Bolzen unterscheiden. Das Einpresselement weist üblicherweise ein Kopfteil mit einem an dessen Unterseite angeformten Steg auf. Der Steg kann auch als Bund oder Kragen bezeichnet werden. Beim Einpressen wird das Einpresselement mit dem Steg in eine Bohrung des Bauteils eingefügt und liegt mit dem Kopfteil nach Art einer Schulter auf dem Bohrungsrand auf. Als Verdrehschutz ist beispielsweise ein unrund ausgebildeter Steg mit Kanten vorgesehen. Auch können an der Unterseite des Kopfteils als Verdrehschutz radial angeformte Rippen ausgebildet sein, die beim Setzen in das Blech eingepresst werden.

Zur Ausbildung der formschlüssigen Verbindung beim Setzvorgang, um also das Einpresselement gegen ein Herausfallen zu sichern, sind unterschiedliche Verfahren bekannt.

So ist beispielsweise oftmals vorgesehen, dass die Steghöhe der Einpressmutter die Bauteildicke übersteigt und der übersteigende Anteil des Steges umgebogen wird, so dass das Bauteil zwischen dem Kopfteil der Einpressmutter und dem umgebogenen Teilbereich des Stegs eingeklemmt ist. Derartige Einpressmuttern mit einem umgebogenen Rand führen jedoch bei dicken Blechen nur zu unbefriedigenden Ergebnissen. Unter dicken Blechen werden hierbei Bleche mit einer Blechdicke größer als 2,5 mm und insbesondere auch größer als 3,5 mm verstanden.

Aus der WO 82102579 ist eine Einpressmutter zu entnehmen, bei der unterhalb des Kopfteiles im Steg eine ringförmige Nut eingearbeitet ist. In diese wird beim Einpressvorgang infolge einer entsprechenden Ausgestaltung der Unterseite des Kopfteils durch Kaltverformung Material des Blechs eingepresst. Ein ähnliches Prinzip ist auch aus der DE 29 20 211 A1 zu entnehmen, wobei hierbei der Steg nach Art eines Schwalbenschwanzes ausgebildet ist und mit dem Kopfteil einen Hinterschnitt bildet, in den beim Setzvorgang wiederum durch Umformen des Bleches Material eingepresst wird.

Aus der der DE 28 18 756 A1 ist eine Einpress- oder Gewindemutter zu entnehmen, bei der der sich an die Kopfunterseite des Kopfteils anschließende Steg oder Bund eine der Bauteildicke entsprechende Höhe aufweist. Der Bund bildet beim Setzvorgang durch Stauchen einen stumpfen Kegelwinkel aus, wodurch einerseits der Bund einen Hinterschnitt mit dem Kopfteils bildet und zum anderen in diesen Hinterschnitt Blechmaterial eingeschlossen ist.

Der vorliegenden Erfindung liegt die Aufgabe zugrunde, eine einfache und sichere Befestigung eines Einpresselements, insbesondere einer Einpressmutter, auch in dicken Bauteilen zu gewährleisten.

Die Aufgabe wird erfindungsgemäß gelöst durch ein Bauteil mit den Merkmalen nach Anspruch 1. Das Bauteil weist ein in eine Bohrung eingepresstes Einpresselement, insbesondere eine Einpressmutter, mit einem Kopfteil und einem sich daran anschließenden Steg auf. Wesentlich ist nun, dass die Höhe des Stegs kleiner und damit unabhängig von der Bauteildicke ist, und dass ein Verformungsbereich des Stegs vorgesehen ist. Dieser wird beim Setzvorgang umgeformt und in die Bohrungswand eingepresst.

Diese Ausgestaltung hat den entscheidenden Vorteil, dass zur Ausbildung einer formschlüssigen Verbindung zwischen der Einpressmutter und dem Bauteil nicht das Bauteil, sondem lediglich der Steg verformt und in das Bauteil eingepresst oder eingeschnitten ist. Im Einpressbereich findet lediglich eine Verdrängung des Bauteilmaterials statt. Im gesetzten Endzustand ist durch das Einpressen in die Bohrungswand der eingepresste Verformungsbereich allseitig vom Material des Bauteils umgeben. Dadurch ist die Einpressmutter besonders sicher und dauerhaft gehalten. Es ist ein in zwei Axialrichtungen wirkender Formschluss zwischen dem Steg und dem Bauteilmaterial ausgebildet. Durch das allseitige Umschließen ist beispielsweise ausgeschlossen, dass der umgebogene Verformungsbereich wieder etwas zurückweicht, wodurch der sichere Sitz beeinträchtigt werden würde.

Ein weiterer wesentlicher Vorteil ist darin zu sehen, dass eine derartige Einpressmutter weitgehend unabhängig von der Bauteildicke ist, da es für den festen Sitz der Einpressmutter unerheblich ist, um wieviel die Bauteildicke die Höhe des Steges überragt. Die Einpressmutter lässt sich daher universell für unterschiedlichste Bauteildicken einsetzen und es müssen für unterschiedliche Dicken keine verschiedenen Einpressmuttern hergestellt und bevorratet werden.

Weiterhin ist eine derartige Einpressmutter herstellungstechnisch einfach zu verwirklichen, da bei der Herstellung keine speziellen Maßnahmen zur Ausbildung beispielsweise eines Hinterschnitts getroffen werden müssen. Auch ist die Verarbeitung, also das Einpressen der Einpressmutter in das Bauteil, aufgrund eines lediglich einstufigen Setzvorgangs problemlos und einfach auszuführen.

Gemäß einer zweckdienlichen Weiterbildung weist der Steg einen sich in die Bohrung hinein erstreckenden Schaftbereich auf, welcher bevorzugt parallel zur Bohrungswand verläuft und an den sich der Verformungsbereich anschließt. Der Außendurchmesser des Schaftbereichs entspricht dabei insbesondere dem Innendurchmesser der Bohrung. Dadurch bildet der Schaftbereich auch im gesetzten Zustand eine Art Hülse und bietet dadurch einen besonders guten Sitz der Einpressmutter in der Bohrung. Auch ist durch die durch den Schaftbereich gebildete Hülse eine besonders gute Führung einer beispielsweise in die Einpressmutter eingeschraubten Schraube gegeben. Durch die Ausgestaltung mit dem unverformten Schaftbereich und dem umgeformten Verformungsbereich wird also der Steg lediglich in einem Teilbereich umgeformt.

Zweckdienlicherweise weist hierbei der Schaftbereich ein Innengewinde mit insbesondere mehreren Gewindegängen auf. Durch diese Maßnahme wird ein vergleichsweise langgestreckter Gewindebereich und damit ein sicherer Halt einer Schraube erreicht.

Im Hinblick auf einen einfachen Setzvorgang weist der Verformungsbereich an seiner Innenseite endseitig eine insbesondere nach Art einer konischen Verjüngung ausgebildete Schräge auf. Diese wirkt beim Setzen mit einem Stempelkopf eines Stempels zusammen, wobei der Stempelkopf vorzugsweise komplementär zu der Schräge des Verformungsbereiches ausgebildet ist.

Die Aufgabe wird gemäß der Erfindung weiterhin gelöst durch ein Einpresselement mit den Merkmalen des Patentanspuchs 5, welches ein Kopfteil und einen sich hieran anschließenden Steg mit einem Schaftbereich und einen sich daran anschließenden Verformungsbereich aufweist, wobei lediglich der Verformungsbereich zum radialen Aufweiten vorgesehen ist.

Bevorzugte Ausgestaltungen des Einpresselements sind den Unteransprüchen zu entnehmen. Die im Hinblick auf das Bauteil mit eingepresstem Einpresselement angeführten Vorteile und bevorzugten Ausgestaltungen lassen sich sinngemäß auch auf das Einpresselement übertragen.

Gemäß einer bevorzugten Ausgestaltung ist hierbei insbesondere vorgesehen, dass im unmontierten Zustand die Außenwand des Stegs senkrecht oder unter Einschluss eines stumpfen Winkels zur Unterseite des Kopfteils orientiert ist. In Bezug auf die Bohrungswand der Bohrung verläuft der Steg daher im ungesetzten Zustand parallel oder zur Ausbildung einer Einführungsschräge leicht geneigt zur Bohrungswand. Zwischen dem Steg und der Unterseite des Kopfteils ist kein Hinterschnitt gebildet. Bevorzugt entspricht der Außendurchmesser des Stegs bzw. der größte Außendurchmesser bei der geneigten Ausgestaltung bis auf einen notwendigen Toleranzspielraum dem Innendurchmesser der Bohrung. Das Einpresselement weist einen einfach zu fertigenden, hülsenartigen Steg mit einem Schaftbereich und einem Verformungsbereich mit glatter Außenwand und ohne Nuten oder dergleichen auf.

Weiterhin ist gemäß einer zweckdienlichen Ausgestaltung ein Sicherungssteg vorgesehen, der an der Unterseite des Kopfteils vom Steg in radialer Richtung beabstandet angeordnet ist. Der Sicherungssteg ist bevorzugt ebenfalls ringartig ausgebildet und insbesondere als Randsteg am Außenrand des Kopfteils angeordnet. Durch die Anordnung des Sicherungsstegs widersteht das gesetzte Einpresselement höheren Auspreßkräften. Bei einem in Gegenrichtung zur Setzrichtung einwirkenden Kraft verspreizt sich nämlich das Einpresselement im Bauteil durch das Zusammenwirken des nach dem Setzvorgang in die Bohrungswand eingeformten Stegs mit dem in die Bauteiloberfläche eingepressten Sicherungssteg.

Vorzugsweise ist an der unteren Stirnseite des Stegs zumindest eine, bevorzugt mehrere, Aussparungen vorgesehen. Da die Stirnseite im gesetzten Zustand in das Material des Bauteils hineinragt wird durch diese Ausgestaltung ein in Umfangsrichtung wirkender Formschluss ausgebildet, welcher eine Verdrehsicherung für das in die Bohrung eingepresste Einpresselement bildet.

Zweckdienlicherweise weist der Verformungsbereich zumindest im Übergangsbereich zum Schaftbereich eine im Vergleich zum Schaftbereich verringerte Wandstärke aufweist. Dadurch läßt sich der Verformungsbereich definiert im Übergangsbereich zum Schaftbereich umbiegen. Die verringerte Wandstärke kann auch durch eine Kerbe gebildet sein, die eine Sollbiegestelle definiert.

Die Aufgabe wird gemäß der Erfindung weiterhin gelöst durch ein Verfahren zum Einpressen eines Einpresselements in ein Bauteil. Hierbei wird derart vorgegangen, dass das Einpresselement mit seinem Steg in eine Bohrung des Bauteils eingesetzt wird, wobei das Bauteil eine die Höhe des Stegs übersteigende Bauteildicke aufweist. Von der Unterseite des Bauteils her wird ein Stempel mit einem sich verjüngenden Stempelkopf eingeführt. Beim Einpressen der Einpressmutter wird aufgrund des sich verjüngenden Stempelkopfes der Steg in seinem Verformungsbereich nach außen verformt und dadurch in die Bohrungswand des Bauteils eingepresst, und zwar derart, dass der eingepresste Teilbereich des Stegs allseitig vom Material des Bauteils umgeben ist. Das Einpressen in die Bohrungswand wird hierbei insbesondere durch den in die Bohrung hineinragenden Stempelkopf gewährleistet, der insbesondere nach Art eines Zylinders ausgebildet ist.

Für einen besonders kostengünstigen und einfachen Setzvorgang wird das Einpresselement bevorzugt in einem einstufigen Vorgang in das Bauteil eingepresst. Unter einstufig wird hierbei verstanden, dass das Einführen des Einpresselements in die Bohrung sowie die Befestigung in der Bohrung, insbesondere das Aufspreizen des Verformungsbereichs in die Bohrungswand hinein, innerhalb eines Arbeitstaktes geschieht.. Insbesondere erfolgt die Befestigung zeitgleich mit dem Einführen, d.h. während des Einführens in die Bohrung wird gleichzeitig der Verformungsbereich aufgespreizt und somit das Einpresselement befestigt. Am Ende des Einführvorgangs ist auch die Befestigung abgeschlossen.

Um das gewünschten Aufweiten des Stegs zu erreichen, weist der Stempel vorzugsweise einen kegel- oder kegelstumpfförmigen oder gerundeten Stempelkopf auf. Durch diese Ausgestaltung wird der Steg beim Setzvorgang, bei dem die Einpressmutter zunehmend gegen den Stempel verschoben wird, nach und nach verformt und in die Bohrungswand eingepresst. Von besonderem Vorteil ist hierbei, wenn der Stempelkopf eine an die Schräge des Stegs angepasste Außenfläche aufweist. Insbesondere weist daher der Stempel eine zu der Schräge des Stegs komplementäre konische Verjüngung auf, d.h. der Kegelwinkel des abgeschrägten Verformungsbereichs und der des Stempelkopfes entsprechen sich.

Um ein möglichst großes Aufweiten des Stegs im Verformungsbereich zu erzielen, weist der Stempel in einer zweckdienlichen Ausgestaltung einen Schaft mit einem an den Bohrungsradius angepassten Außendurchmesser auf, mit dem er beim Einpressvorgang in die Bohrung hineinragt. Der Schaft sitzt also bis auf einen notwendigen Toleranzspielraum passgenau in der Bohrung, so dass der Stempel von der Bohrung geführt wird.

Um zu gewährleisten, dass lediglich ein Teilbereich des Stegs verformt wird und dass ein an der Innenseite im Schaftbereich des Stegs angeordnetes Innengewinde unbeschädigt bleibt, ist der Stempel beim Setzvorgang bevorzugt nur teilweise in die Bohrung eingeführt.

Ausführungsbeispiele der Erfindung werden im Folgenden anhand der Figuren erläutert. Es zeigen jeweils in schematischen und stark vereinfachten Darstellungen:
- Fig. 1A: eine ausschnittsweise Darstellung eines in eine Bohrung eines Bauteils eingeführten Einpresselements sowie einen teilweise in die Bohrung eingeführten Stempel eines Setzwerkzeugs zu Beginn des Setzvorgangs
- Fig. 1B: die Darstellung gemäß Fig. 1A am Ende des Setzvorgangs,
- Fig. 2A, 2B: eine modifizierte Ausgestaltung zur Variante nach den Fig. 1A, 1B,
- Fig. 3A, 3B: eine ausschnittsweise Darstellung eines Einpresselements mit einer geneigten bzw. teilweise geneigten Außenwand des Stegs,
- Fig. 4: eine ausschnittsweise Darstellung eines Einpresselements mit einem Sicherungssteg und
- Fig. 5A - 5C: jeweils ein Einpresselement mit einer stirnseitigen Aussparung am Steg in unterschiedlichen Ausführungen.

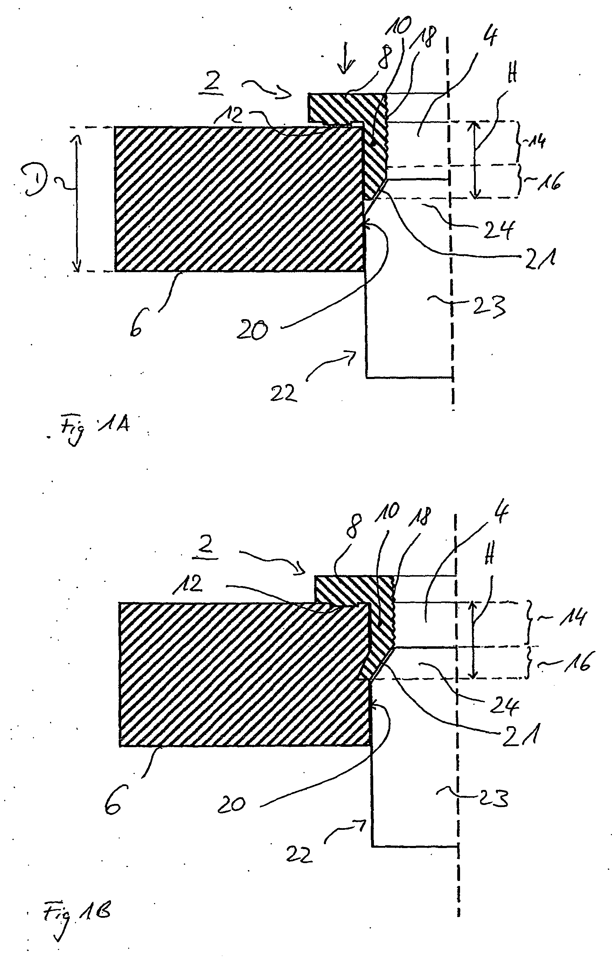

Die Figuren 1A bis 4 zeigen jeweils lediglich eine Symmetriehälfte der Anordnung bzw. des Einpresselements in einer Schnittansicht. Die Symmetrieachse ist durch die gestrichelte Linie dargestellt. Gemäß den Fig. 1A bis 2B ist ein als Einpressmutter 2 ausgebildetes und zur Symmetrieachse rotationssymmetrisches und insbesondere kreisrundes Einpresselement in eine Bohrung 4 eines Bauteils 6 eingefügt. Das Bauteil 6 weist eine Bauteildicke D auf, die vorzugsweise größer als 2,5mm und insbesondere größer als 3,5 mm ist. Das Bauteil 6 ist insbesondere ein Blech.

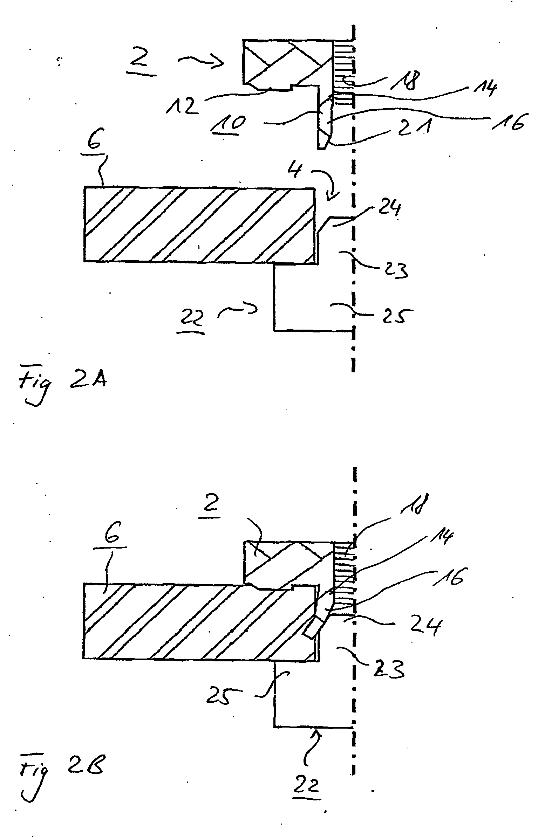

Die Einpressmutter 2 weist ein Kopfteil 8 auf, an das sich ein Steg 10 anschließt. Kopfteil 8 und Steg 10 sind daher in etwa nach Art eines L geformt. An der Unter seite des Kopfteils 8 sind über den Umfang verteilt weiterhin mehrere radial verlaufende Rippen 12 vorgesehen, die im gesetzten Zustand als Verdrehschutz wirken. Der Steg 10 umfasst einen sich an das Kopfteil 8 anschließenden Schaftbereich 14, an den sich wiederum ein Verformungsbereich 16 anschließt. Gemäß der Variante nach den Fig. 2A und 2B weist der Verformungsbereich 16 eine geringere Wandstärke als der Schaftbereich 14 auf. Der Steg 10 hat insgesamt eine Höhe H, die geringer ist als die Bauteildicke D. An der Innenseite des Kopfteils 8 sowie des Schaftbereichs 14 ist ein Innengewinde 18 mit mehreren Gewindegängen auch im Schaftbereich 14 vorgesehen. Der Verformungsbereich 16 ist an seiner Innenseite zu seinem dem Kopfteil 8 abgewandten Ende hin verjüngt ausgebildet und weist eine Schräge 21 auf. Die Einpressmutter 2 hat daher an ihrer Unterseite eine kegelstumpfförmige Aufnahme oder Verjüngung. Die Außenseite des Stegs 10 verläuft parallel zur Bohrungswand 20 der Bohrung 4. Der Außendurchmesser des Stegs 10 entspricht im Wesentlichen dem Bohrungsdurchmesser der Bohrung 4.

Die Einpressmutter 2 hat im Bereich ihres Kopfteils 8 einen größeren Außendurchmesser als der Bohrdurchmesser, so dass das Kopfteil 8 die Bohrung 4 überdeckt und die Einpressmutter 2 mit dem Kopfteil 8 auf der Oberseite des Bauteils 6 zum Aufliegen kommt.

Für den Einpressvorgang ist ein Stempel 22 vorgesehen, der von unten mit einem zylindrischen Schaft 23 zumindest annähernd passgenau in die Bohrung 4 eingeführt ist. Der Stempel 22 weist an seinem vorderen sich an den Schaft 23 anschließenden Ende einen Stempelkopf 24 auf, der sich nach Art eines Kegelstumpfes konisch verjüngt. Der Kegelstumpfwinkel ist dabei derart gewählt, dass die Außenfläche des Stempelkopfs 24 in etwa parallel zu der Schräge 19 des Verformungsbereichs 16 verläuft.

Im Ausführungsbeispiel der Fig. 2A, 2B weist der Stempel 22 ein gegenüber dem Schaft 23 verbreitertes Fußteil 25 auf, so dass eine über den Bohrungsrand überstehende Auflagefläche gebildet ist, mit der sich der Stempel 22 beim Setzvorgang an der Unterseite des Bauteils 6 abstützt. Die Eindringtiefe des Schafts 23 in die Bohrung 4 ist hierdurch begrenzt und festgelegt. Damit ist zugleich auch der Ort, an dem der Steg 10 in die Bohrungswand gepresst wird, festgelegt.

Zum Einpressen der Einpressmutter 2 in das Bauteil 6 wird die Einpressmutter 2 mit ihrem Steg 10 in die Bohrung 4 eingeführt und sitzt dort zunächst weitgehend spielfrei. Anschließend wird in Pfeilrichtung auf das Kopfteil 8 von einem hier nicht dargestellten Setzwerkzeug eine Einpresskraft ausgeübt. Gleichzeitig ist von unten in die Bohrung 4 der Stempel 22 eingeführt. Zu Beginn des Setzvorgangs liegen die Schräge 19 sowie die Außenflächen des Stempelkopfs 24 in etwa plan aneinander an. Die Einpressmutter wird zunehmend in Pfeilrichtung gegen den Stempel 22 gepresst. Dadurch wird der Verformungsbereich 16 nach außen in die Bohrungswand 20 hinein umgebogen, so dass der Verformungsbereich 16 in das Material des Bauteils 6 einschneidet. Die Einpressmutter 2 wird hierbei so weit eingepresst, bis sie mit ihrer Unterseite des Kopfteils 8 plan auf der Oberfläche des Bauteils 6 zum Aufliegen kommt In diesem Endzustand sind die Rippen 12 in das Bauteil 6 eingeformt. Wie aus den Fig. 1A bis 2B ersichtlich ist, wird die Einpressmutter 2 in einem einstufigem Setzvorgang befestigt, bei dem das Einführen der Einpressmutter 2 in die Bohrung 4 und ihre Befestigung hierin gleichzeitig erfolgen.

Im gesetzten Endzustand, wie er aus den Fig. 1B, 2B zu entnehmen ist, dringt also der Verformungsbereich 16 mit einer Spitze in das Bauteil 6 hinein und ist vom Material des Bauteils 6 allseitig umschlossen. Der Verformungsbereich 16 bildet daher einen in beide Axialrichtungen wirkenden Formschluss und sorgt damit für einen besonders sicheren Sitz. An der zur Bohrungswand 20 orientierten Außenseite des Verformungsbereichs 16 kann weiterhin eine (nicht dargestellte) Ausnehmung oder Kerbe vorgesehen sein, so dass im gesetzten Zustand in diese Kerbe Material des Bauteils 6 eingepresst ist und zur zusätzlichen Halterung eine Art Widerhaken bildet.

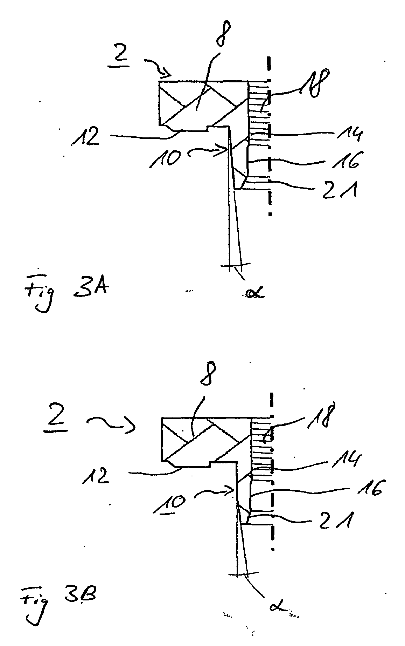

Bei der Ausgestaltung nach Fig. 3A schließt die Außenwand des Stegs 10 mit der Lotrechten einen spitzen Winkel α ein, der im Ausführungsbeispiel etwa 5° beträgt, so dass eine Einführungsschräge ausgebildet ist, die ein leichtes Einführen und Zentrieren der Einpressmutter 2 ermöglicht. Zu der Unterseite des Kopfteils 8 schließt die Außenwand daher einen stumpfen Winkel (90°+ α) ein. Im Unterschied hierzu ist die Einführungsschräge gemäß der Ausgestaltung nach Fig. 3B lediglich im stimseitigen Bereich des Stegs 10 ausgebildet.

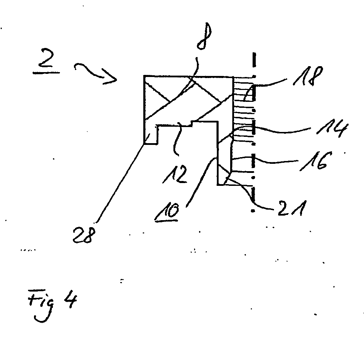

In Fig. 4 ist eine Ausführungsform mit einem randseitig an der Unterseite des Kopfteils 8 umlaufenden Sicherungsstegs 28 dargestellt. Beim Setzvorgang wird dieser Sicherungssteg 28 in die Oberseite des Bauteils 6 eingepresst. Durch diesen Sicherungssteg 28 wird die für ein (unerwünschtes) Herausgleiten aus der Bohrung 4 notwendige Auspreßkraft erhöht. Denn bei einer in entgegen der Setzrichtung wirkenden Auspreßkraft verspreizt sich die Einpressmutter im Bauteil 6 aufgrund des Zusammenwirkens des Sicherungsstegs 28 mit dem in die Bohrungswand eingepressten Steg 10.

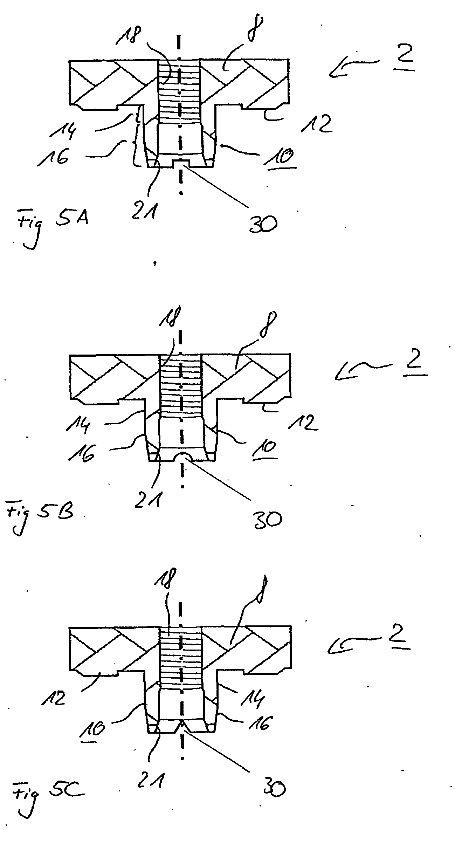

Gemäß den Ausführungsvarianten der Fig. 5A bis 5C weist der Steg 10 an seinem stimseitigen Ende Aussparungen 30 auf. Bevorzugt sind mehrere dieser Aussparungen 30 insbesonder in gleichmäßigen Abständen über den Umfang der Stirnseite verteilt angeordnet. Im eingepressten Zustand bilden diese Aussparungen 30 mit dem Material des Bauteils 6 einen in Umfangsrichtung wirkenden Formschluss, so dass eine Verdrehsicherung ausgebildet ist und ein Verdrehen der gesetzten Einpressmutter 2 im Bauteil 6 vermieden ist. Die Geometrie der ausgesparten Fläche ist hierbei beispielsweise rechteckförmig (Fig. 5A), halbkreisförmig (Fig. 5B) oder dreiecksförmig (Fig. 5C).

Mit hier beschriebenen Einpressmutter 2 mit ihren verschiedenen Ausführungsvarianten ist durch einen einfachen einstufigen Setzvorgang ein besonders sicheres Befestigen der Einpressmutter 2 in der Bohrung 4 des Bauteils 6 ermöglicht. Hierzu ist keine Umformung des Beuteils 6 erforderlich. Vielmehr wird ein Formschluss dadurch ausgebildet, dass ein Teil der Einpressmutter 2, nämlich ein Teil des Verformungsbereichs 16, in die Bohrungswand 20 eingepresst bzw. eingeschnitten wird und dort lediglich Material des Bauteils 6 verdrängt. Eine derartige Einpressmutter 2 eignet sich speziell für den Einsatz bei dicken Blechen, da sie neben der sicheren Befestigung universell für Bauteile mit unterschiedlichen Bauteildicken eingesetzt werden kann.

### Bezugszeichenliste

- 2: Einpressmutter
- 4: Bohrung
- 6: Bauteil
- 8: Kopfteil
- 10: Steg
- 12: Rippe
- 14: Schaftbereich
- 16: Verformungsbereich
- 18: Innengewinde
- 20: Bohrungswand
- 21: Schräge
- 22: Stempel
- 23: Schaft
- 24: Stempelkopf
- 25: Fußteil
- 28: Sicherungssteg
- 30: Aussparung

- D: Bauteildicke
- H: Höhe
- α: Winkel

## Patentansprüche

1. Bauteil (6) mit einem in einer Bohrung (4) des Bauteils (6) eingepressten Einpresselement (2), insbesondere Einpressmutter, welches ein die Bohrung (4) überstehendes Kopfteil (8) und an dessen Unterseite einen insbesondere ringförmigen Steg (10) aufweist, dessen Höhe (H) kleiner als die Bauteildicke (D) ist, wobei ein Verformungsbereich (16) des Stegs (10) vorgesehen ist, der durch Umformen beim Setzvorgang in die Bohrungswand (20) eingepresst ist.

2. Bauteil (6) nach Anspruch 1, bei dem der Steg (10) einen sich in die Bohrung (4) hinein erstreckenden Schaftbereich (14) aufweist, der insbesondere parallel zur Bohrungswand (20) verläuft und an den sich der Verformungsbereich (16) anschließt.

3. Bauteil (6) nach Anspruch 2, bei dem der Steg (10) im Schaftbereich (14) ein Innengewinde (18) mit insbesondere mehreren Gewindegängen aufweist.

4. Bauteil (6) nach einem der vorhergehenden Ansprüche, bei dem der Steg (10) endseitig im Verformungsbereich (16) an seiner Innenseite eine Schräge (21) aufweist.

5. Einpresselement (2) zum Einpressen in ein eine Bohrung (4) aufweisendes Bauteil (6), insbesondere Einpressmutter, mit einem Kopfteil (8), mit dem es im eingepressten Zustand auf dem Bauteil (6) aufliegt und an dessen Unterseite ein insbesondere ringförmiger Steg (10) angeordnet ist, welcher einen Schaftbereich (14) und einen sich hieran anschließenden Verformungsbereich (16) aufweist, wobei der Verformungsbereich (16) zum radialen Aufweiten vorgesehen ist.

6. Einpresselement (2) nach Anspruch 5, bei dem die Höhe (H) des Stegs (10) kleiner als die Bauteildicke (D) ist.

7. Einpresselement (2) nach Anspruch 5 oder 6, bei dem die Außenwand des Stegs (10) senkrecht oder zumindest teilweise unter Einschluss eines stumpfen Winkels zur Unterseite des Kopfteils (8) orientiert ist.

8. Einpresselement (2) nach einem der Ansprüche 5 bis 7, bei dem der Steg (10) im Schaftbereich (14) ein Innengewinde (18) mit insbesondere mehreren Gewindegängen aufweist.

9. Einpresselement (2) nach einem der Ansprüche 5 bis 8, bei dem der Steg (10) endseitig im Verformungsbereich (16) an seiner Innenseite eine Schräge (21) aufweist.

10. Einpresselement (2) nach einem der Ansprüche 5 bis 9, bei dem an der Unterseite des Kopfteils (8) ein von dem Steg (10) beabstandeter und insbesondere randseitig umlaufender Sicherungssteg (28) angeordnet ist.

11. Einpresselement (2) nach einem der Ansprüche 5 bis 10, bei dem der Steg (10) an seiner Stirnseite zumindest eine Aussparung (30) aufweist.

12. Einpresselement (2) nach einem der Ansprüche 5 bis 11, bei dem der Verformungsbereich (16) zumindest im Übergangsbereich zum Schaftbereich (14) eine im Vergleich zum Schaftbereich (14) verringerte Wandstärke aufweist.

13. Verfahren zum Einpressen eines Einpresselements (2), insbesondere Einpressmutter, in ein Bauteil (6), wobei das Einpresselement (2) ein Kopfteil (8) und an dessen Unterseite einen insbesondere ringförmigen Steg (10) umfasst und das Bauteil (6) eine Bohrung (4) für das Einpresselement (2) mit einer die Höhe (H) des Stegs (10) übersteigenden Bauteildicke (D) aufweist, wobei in die Bohrung (4) ein Stempel (22) mit einem sich verjüngenden Stempelkopf (24) eingeführt wird und der Stempelkopf (24) zumindest einen Teilbereich des Stegs (10) radial nach außen umformt und diesen in die Bohrungswand (20) des Bauteils (6) einpresst.

14. Verfahren nach Anspruch 13, bei dem das Einpressen des Einpresselements (2) in das Bauteil (6) in einem einstufigen Setzvorgang erfolgt.

15. Verfahren nach Anspruch 13 oder 14, bei dem der Stempel (22) einen kegel- oder kegelstumpfförmigen oder gerundeten Stempelkopf (24) aufweist.

16. Verfahren nach einem der Ansprüche 13 bis 15, bei dem der Steg (10) endseitig an seiner Innenseite eine Schräge (21) aufweist, wobei die Schräge (21) und die Außenfläche des Stempelkopfes (24) aneinander angepasst sind und insbesondere parallel zueinander verlaufen.

17. Verfahren nach einem der Ansprüche 13 bis 16, bei dem der Stempel (22) einen Schaft (23) mit einem an den Bohrungsradius angepassten Außendurchmesser aufweist und der Schaft (23) in die Bohrung (4) hineinragt.

18. Verfahren nach einem der Ansprüche 16 bis 17, bei dem der Stempel (22) nur teilweise in die Bohrung (4) eingeführt wird, so dass ein Schaftbereich (14) des Stegs (10) unverformt bleibt.
